# EUROPEAN PATENT SPECIFICATION

(11) **EP 2 816 261 B1**
(45) Date of publication and mention of the grant of the patent: **25.09.2019**
(21) Application number: 13749065.2
(22) Date of filing: 16.01.2013
(51) Int. Cl.: F16J 15/3244, F16J 15/3204

(54) **SHAFT-SEALING DEVICE**
SCHAFTDICHTUNGSVORRICHTUNG
DISPOSITIF D'ÉTANCHÉITÉ D'ARBRE

(30) Priority: 15.02.2012 JP 2012031108
(43) Date of publication of application: 24.12.2014
(73) Proprietor: Eagle Industry Co., Ltd., Minato-ku Tokyo 105-8587 (JP)
(72) Inventor: OSHIMA Hiroki, Tokyo 105-8587 (JP); SANADA Masamitsu, Tokyo 105-8587 (JP); HOSOE Takeshi, Tokyo 105-8587 (JP)
(74) Representative: WSL Patentanwälte Partnerschaft mbB
(86) International application number: PCT/JP2013/050605
(87) International publication number: WO 2013/121813

(56) References cited:
- EP-A1- 1 598 580
- WO-A1-2006/062929
- DE-A1- 4 119 324
- JP-A- S57 186 665
- JP-A- 2001 214 979
- JP-A- 2001 214 979
- JP-A- 2006 283 775
- JP-A- 2009 257 421
- US-A- 4 573 690
- US-A- 4 709 930

## Description

### {TECHNICAL FIELD}

The present invention relates to a lip-type seal shaft seal device for sealing a housing and a rotary shaft.

### {BACKGROUND ART}

In a conventional lip-type seal installed in a stationary housing and creating a sliding tight seal at the surface of a rotary shaft, in order to address environmental issues, attempts have been made to reduce friction through optimizing the lip shape and dimensions and of the lip material; coating the lip sliding surface or of the surface of the shaft paired therewith; or optimizing the surface roughness of the paired shaft.

A problem encountered with a seal in which the lip sliding surface or the surface of the paired shaft is coated, or with one in which surface roughness of the paired shaft is optimized, is that the effect is obtained only initially, and with the passage of time, reduced friction cannot be sustained due to wear.

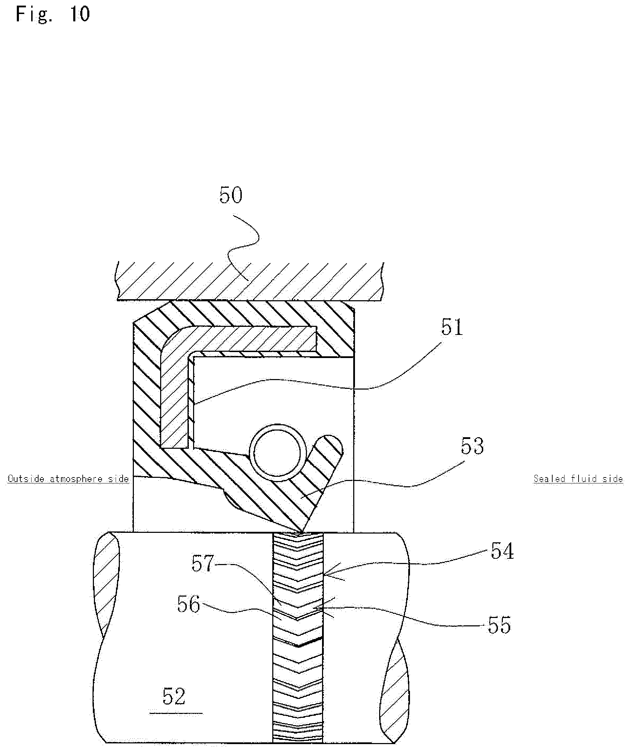

The sealing means shown in Fig. 10 (hereinafter "Prior Art 1;" c.f., e.g., Patent Document 1) is a known shaft seal device affording satisfactory lubricating characteristics. In Prior Art 1, the design incorporates a lip-type seal 51 attached to a housing 50, the lip-type seal 51 having a sealing edge part 53 arranged so as to contact a rotary shaft 52. A contact zone 54 on the rotary shaft surface contacted by the sealing edge part 53 is equipped with an arrow-shaped grooved part 55 furnished with alternating grooves 56 and ridge parts 57, and as the rotary shaft 52 rotates inside the housing 50, the arrow-shaped grooved part 55 creates a pumping effect, which repels foreign matter infiltrating from the outside atmosphere side, and pushes back fluid from the sealed fluid side to maintain a sealing function.

Also known is a shaft seal device furnished with a helical groove in place of the arrow-shaped grooved part of Prior Art 1 (for example, see Patent Document 2).

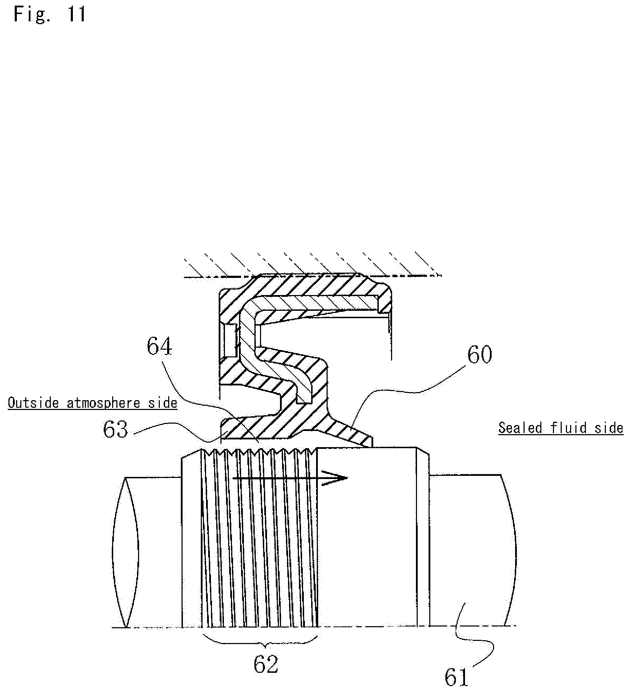

Furthermore, the sealing means shown in Fig. 11 (hereinafter "Prior Art 2." See Patent Document 3, for example) is a known shaft seal device for achieving both low torque and sealing properties.

Prior Art 2 has a seal lip 60 for sealing in a sealed fluid, and a screw pump mechanism 64 disposed to the outside atmosphere side from the seal lip 60, and comprising a screw 62 formed on the surface of a rotary shaft 61, and a cylindrical part 63. The screw pump mechanism 64 creates a fluid pumping action towards the seal lip 60, substantially depressing the strained force of the seal lip 60, thereby ensuring sealing properties by the seal lip 60, as well as realizing lower torque of the seal lip 60 through the screw pump mechanism 64.

However, because the structure of the shaft seal device of Prior Art 1 shown in Fig. 10 is such that the sealing edge part 53 of the lip-type seal 51 contacts the arrow-shaped grooved part 55 formed of a high-hardness material furnished in the contact zone 54 on the rotary shaft surface, the sealing edge part 53 wears down quickly. Moreover, the grooves 56 of the arrow-shaped grooved part 55 have a "V" shape through which the sealed fluid side and the outside atmosphere side communicate directly in the axial direction, and the distal end part of the sealing edge part 53 does not contact the "V" shaped grooves 56, whereby the sealed fluid side and the outside atmosphere side are in a state of constant communication. This makes it possible for the sealed fluid to leak out into the outside atmosphere side when the device is at rest. It is known that in a typical oil seal, a shaft surface roughness of 2.5 µm or greater may result in leakage when at rest, and in the case of Prior Art 1, when the depth of the grooves 56 is 2.5 µm or greater, severe leaking will occur when at rest.

In the shaft seal device furnished with a helical groove in place of the arrow-shaped grooved part of Prior Art 1, the shape of the helical groove is such that the outside atmosphere side and the sealed fluid side are in direct contact therethrough, and therefore the design has the same problem as Prior Art 1.

Furthermore, in the shaft seal device of Prior Art 2 shown in Fig. 11, the constriction force of the seal lip 60 is reduced in order for the torque thereof to be reduced, resulting in problems in regard to a poorer seal produced by the seal lip 60 and outside air infiltrating the sealed fluid side.

International Patent Application WO 2006/062929 refers to a seal assembly between an elastomeric seal component and a surface of a rotating component which incorporates at least one micro-channel having discrete branching elements or micro-recesses. The micro-channels are formed on either the surface of the rotating component or the elastomeric seal component, and are configured to provide a uniform and unidirectional wear surface. The micro-channels permit a controlled amount of lubricant to flow to the elastomeric seal region (R) area while creating a barrier to prevent lubricant axial migration beyond the elastomeric seal region (R).

Japanese Patent Application 2009-257421 refers to a shaft seal device of a shaft seal structure T is provided with a rubber lip part in close contact with the peripheral surface of the rotary shaft, and is provided with a plastic lip part arranged on the more outward side of the machine than the rubber lip part in close contact with the peripheral surface. A first screw groove part is formed in the position of the peripheral surface of the rotary shaft which is opposite to the rubber lip part. Then the second screw groove part returning the lubricating oil to the inside of the machine by a screw groove G with the spinning of the rotary shaft is formed in the position of the peripheral surface of the rotary shaft which is opposite to the plastic lip part. The flow-restriction part restricting the flow of the lubricating oil from the inside of the machine to the outside of the machine by a groove M at the time of rest of the rotary shaft is formed on the more outward side of the machine than the second screw groove part.

United States Patent 4,573,690 A is directed to an improved sealing surface configuration consisting of a gridlike pattern of indentations formed into the surface, uniformly spaced to create a consequently uniformly spaced series of intermediate seal support pads. Each indentation includes a sloped wall converging with an adjacent pad in the direction of seal lip motion. The consequent hydrodynamic pumping action pumps lubricant out of the indentations and over the pads, creating a uniform lip supporting film to reduce friction. A method of deforming and machining the sealing surface to produce the configuration is also disclosed.

### {CITATION LIST}

### {Prior Art Document}

### {Patent Documents}

Patent Document 1: Japanese Laid-Open Patent Application 2001-214979
Patent Document 2: Japanese Laid-Open Patent Application 10-331985
Patent Document 3: Japanese Laid-Open Patent Application 2005-273693
Patent Document 4: International Patent Application WO 2006/062929 A1
Patent Document 5: Japanese Patent Application 2009-257421 A
Patent Document 6: United States Patent 4,573,690 A.

### {SUMMERY OF INVENTION}

### {TECHNICAL PROBLEM}

The present invention was contrived in order to solve the problems encountered in the aforedescribed prior art, it being an object thereof to provide a lip seal-type shaft seal device that does not experience leakage when at rest; that, during rotation, including the initial period of rotation, operates by fluid lubrication while preventing leakage; and that can simultaneously achieve sealing and lubricating functions.

In order to achieve the aforementioned object, the shaft seal device according to a first aspect of the present invention is a lip-type seal shaft seal device equipped with a lip seal for sealing a rotary member for rotating in a forward direction and a reverse direction and a stationary member concentrically disposed to the inside or respectively outside in a radial direction relative to said rotary member,
pumping parts for creating pumping action through relative rotational sliding of the lip seal and the rotary member being formed in continuous fashion in the circumferential direction on the outside peripheral surface of the rotary member;
the pumping parts being configured with grooves forming a periodic structure comprising a plurality of linear asperities of predetermined pitch, said linear asperities being formed so that the direction thereof is at a predetermined angular incline with respect to the sliding direction of the sliding surfaces of said lip seal and respectively said rotary member, said pumping parts are configured with intake pumping parts having the plurality of linear asperities for acting on a sealed fluid in the intake direction, and with discharge pumping parts having the plurality of linear asperities for acting on the sealed fluid in the discharge direction, the intake and discharge pumping parts being arranged in a continuous fashion in the circumference direction on the outside peripheral surface of the rotary member, and the intake pumping parts and discharge pumping parts abutting
against each other independently in alternating fashion along the circumferential
direction, wherein an intake pumping part abuts against a discharge pumping part, which said discharge pumping part further abuts to a further intake pumping pat so to form said continuous alternating fashion in said circumference direction on the outside peripheral surface of the rotary member; the individual asperities of the intake pumping parts and discharge pumping parts are formed such that the inclined angles thereof are symmetrical with respect to the rotation tangent; and
a lip of the lip seal extends in the axial direction towards the outside atmosphere side leaving a portion of the pumping parts on the sealed fluid side exposed, wherein the intake pumping parts and the discharge pumping parts are arranged so that during operation the sealed fluid is drawn into the intake pumping parts and fed into adjacent discharge pumping parts thereby returning the sealed fluid to the sealed fluid side through the action of the discharge pumping parts.

According to this feature, at times of rest, leakage is prevented by the lip of the lip seal pressing against the outside peripheral surface of the rotary member, while during startup, the sealed fluid is drawn into the pumping parts, whereby a lubricant fluid film can rapidly form, lowering the sliding torque at the sliding surface and reducing wear.

Furthermore, during operation, the sealed fluid is drawn into the intake pumping parts, and the sealed fluid is fed into adjacent discharge pumping parts, returning the sealed fluid to the sealed fluid side through the action of the discharge pumping parts, so that sliding surfaces are reliably lubricated by the flow of sealed fluid, while leakage is prevented and a seal is maintained.

Secondly, in a shaft seal device according to a first aspect of the present invention, the lip of the lip seal extends in the axial direction towards the outside atmosphere side and covers the pumping parts leaving a portion of the pumping parts on the sealed fluid side exposed, and is configured to slide against the outside peripheral surface of the rotary member further toward the outside atmosphere side relative to the pumping parts.

According to this feature, because the lip of the lip seal is pressed against the outside peripheral surface of the rotary member to the outside atmosphere side from the pumping parts, leakage when at rest can be reliably prevented.

Thirdly, in a shaft seal device according to a first aspect of the present invention, the lip of the lip seal is configured to slide against the outside peripheral surface of the rotary member in which the pumping parts are formed, leaving a portion of the pumping parts on the sealed fluid side and the outside atmosphere side in the axial direction exposed.

According to this feature, because the lip of the lip seal is configured to press against the outside peripheral surface of the rotary member in which the pumping parts have been formed, the pumping parts can be constituted such that the length thereof in the axial direction is greater than the length of the lip seal in the axial direction, and the pumping action can be improved.

Fourthly, in a shaft seal device according to any of a first to third aspect of the present invention, the pumping parts are configured of grooves of periodic structure comprising a plurality of linear asperities of predetermined pitch, the linear asperities being formed so that the direction thereof is at a predetermined angular incline with respect to the sliding direction of the sliding surfaces.

According to this feature, because the pumping parts can be formed from grooves of periodic structure comprising a plurality of linear asperities of predetermined pitch, the pumping parts are easily formed, and the pumping performance can be freely adjusted by adjusting the incline angle.

Fifthly, in a shaft seal device according to a fourth aspect of the present invention, the plurality of pumping parts are formed such that the directions of the linear asperities of adjacent pumping parts are symmetrical with respect to the sliding direction of the sliding surfaces.

This feature is suitable in cases in which both of the sliding surfaces rotate.

Sixthly, in a shaft seal device according to a fourth or fifth aspect of the present invention, the grooves of periodic structure comprising a plurality of linear asperities of predetermined pitch in the pumping parts are formed through irradiation by a femtosecond laser.

According to this feature, because the grooves of periodic structure comprising a plurality of linear asperities of predetermined pitch in the pumping parts are formed through irradiation by a femtosecond laser, it is possible to improve control of the directionality thereof and control the machining location, whereby the desired periodic structures can be formed in every one of subdivisions obtained by division into discrete small subdivisions.

Seventhly, in a shaft seal device of the present invention according to any of a first to sixth aspect of the present invention, the pumping parts are furnished to the outside peripheral surface of the rotary member, or to the bottom surface of a recessed part formed in continuous fashion in the circumferential direction on the outside peripheral surface of the rotary member.

According to this feature, in cases in which the pumping parts are furnished to the outside peripheral surface of the rotary member, machining thereof is easy; or in cases in which the pumping parts are furnished to the bottom surface of a recessed part formed on the outside peripheral surface of the rotary member, during startup, the sealed fluid drawn into the recessed part can be utilized to rapidly form a lubricant fluid film.

Eighthly, in a shaft seal device of the present invention according to any of a fourth to seventh aspect of the present invention, the intake pumping parts are formed such that the linear asperities become progressively deeper towards the direction of rotation of the rotary shaft in side view, and the discharge pumping parts are formed such that the linear asperities become progressively shallower towards the direction of rotation of the rotary shaft in side view.

According to this feature, in the intake pumping parts, drawing in of the sealed fluid and feed thereof into the discharge pumping parts can be further enhanced; and in the discharge pumping parts, return of the sealed fluid fed therein back to the sealed fluid side can be further enhanced, thereby further improving the lubricating properties of the sliding surfaces and leak prevention.

### {BRIEF DESCRIPTION OF DRAWINGS}

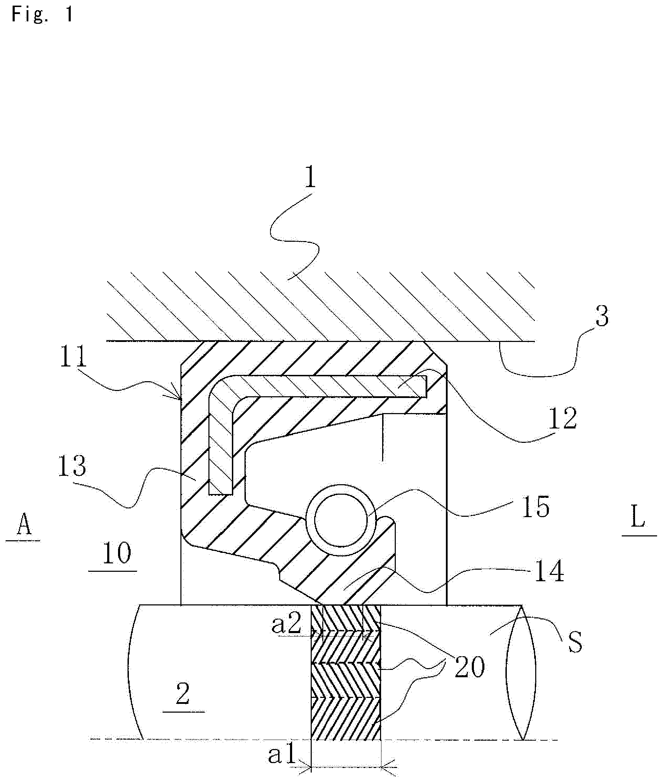

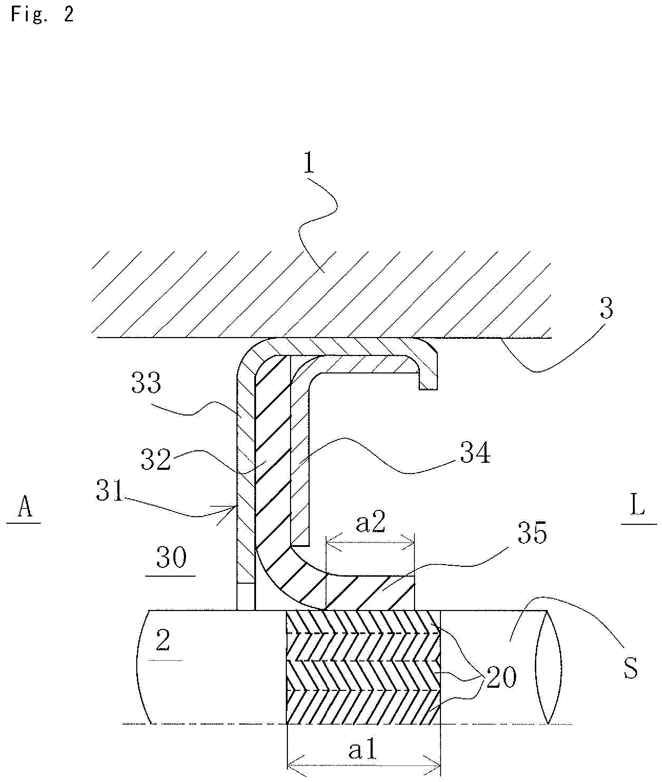

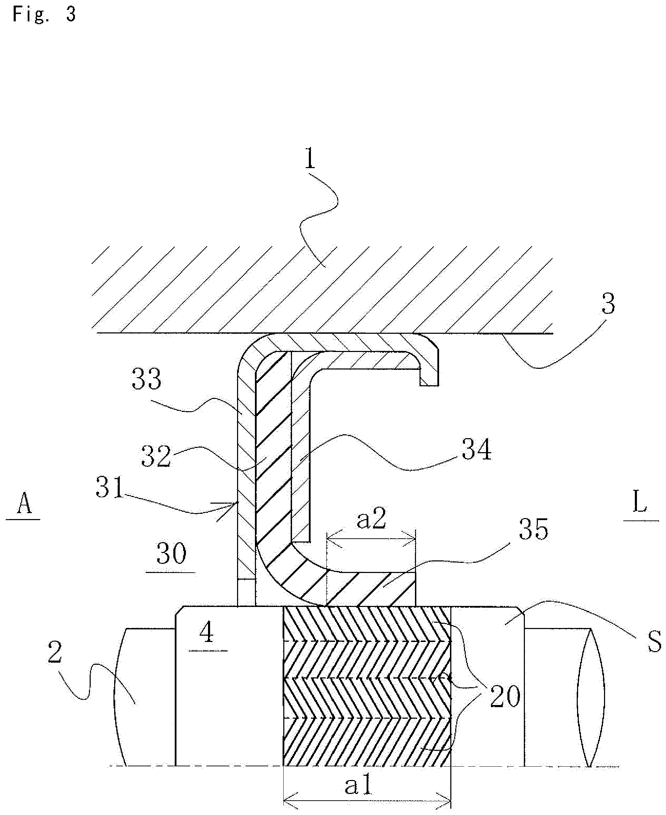

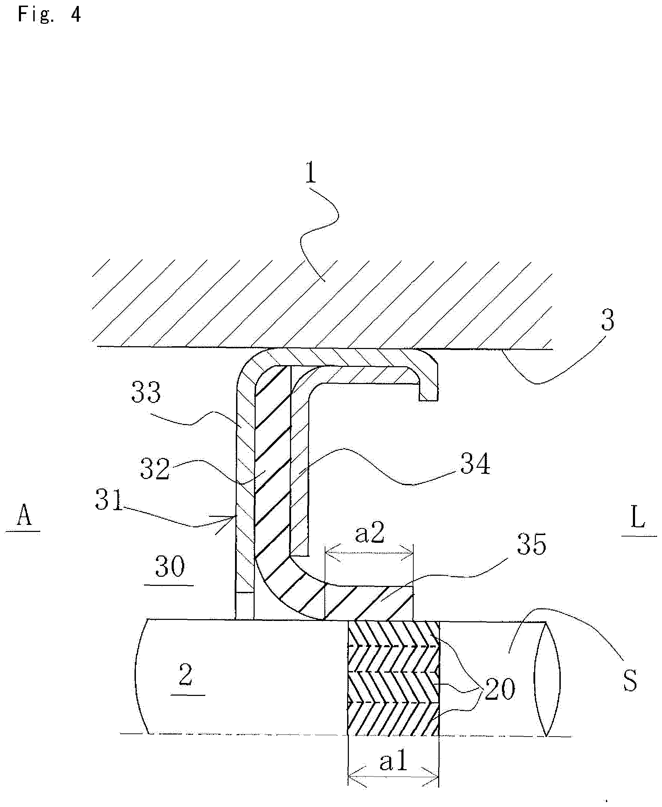

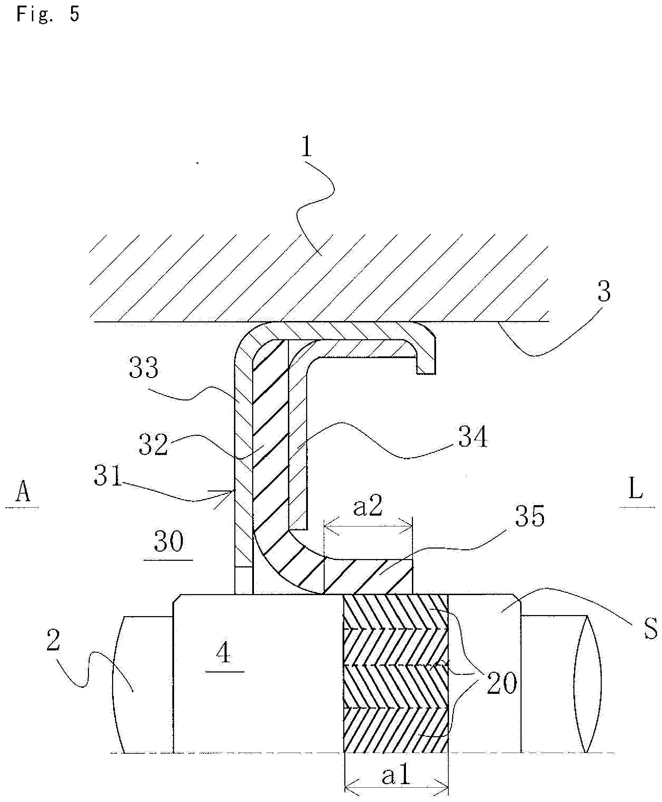

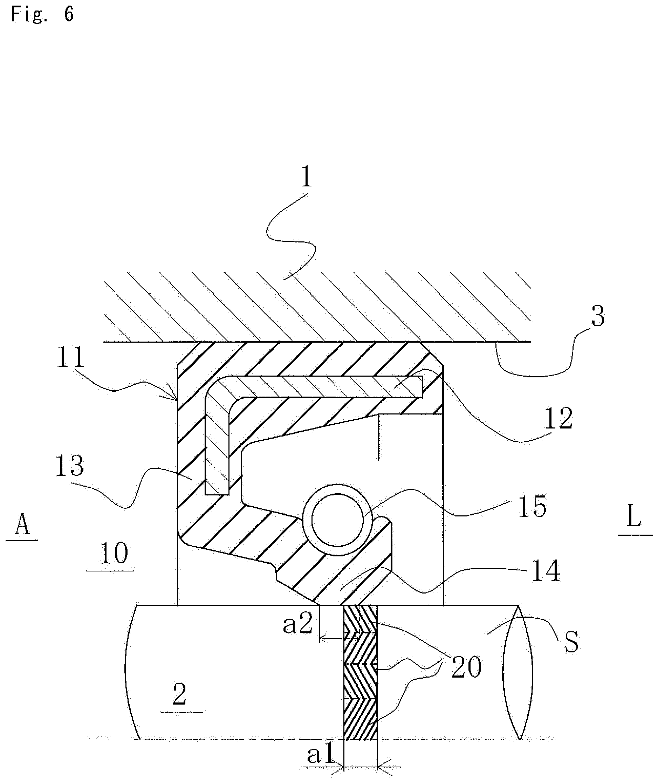

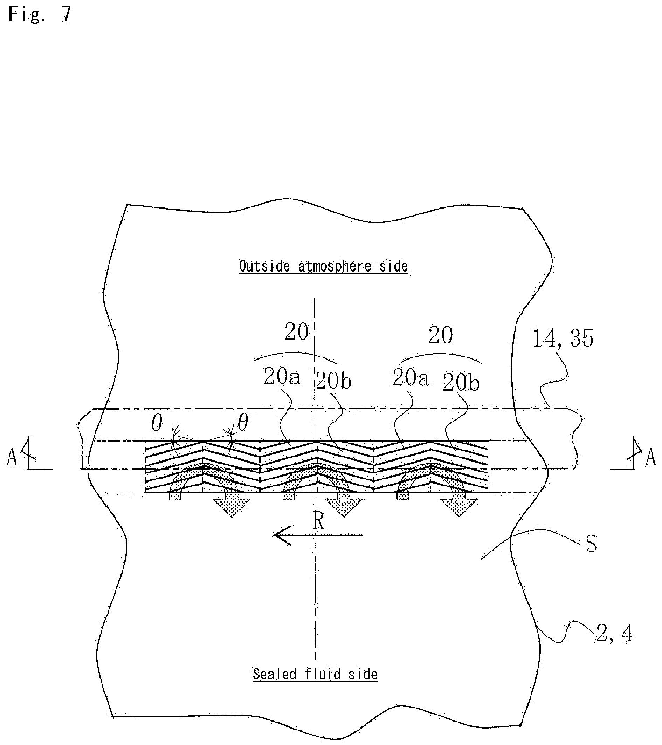

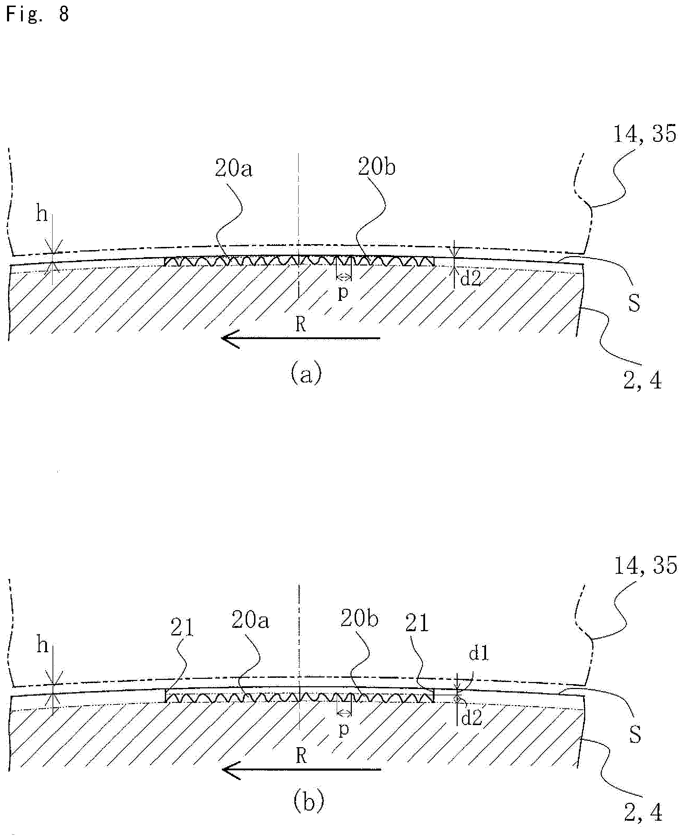

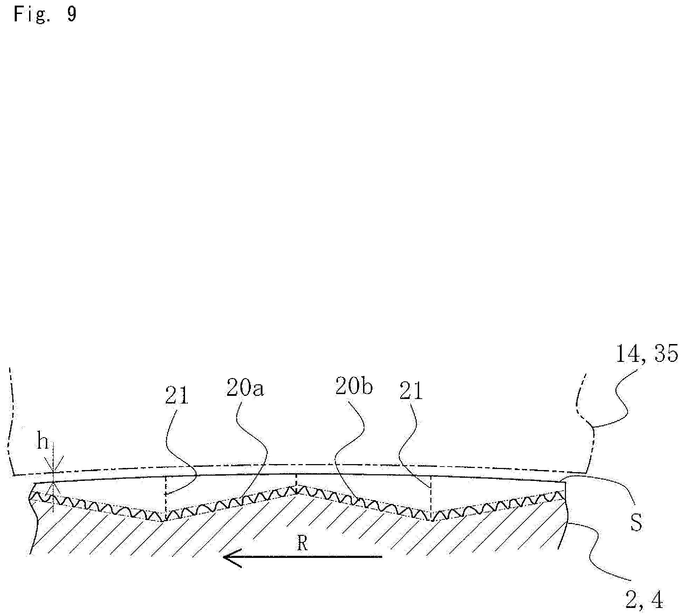

{Fig. 1} A longitudinal sectional view showing the shaft seal device according to a first embodiment of the present invention.
{Fig. 2} Longitudinal sectional view showing the shaft seal device according to a second embodiment of the present invention.
{Fig. 3} Longitudinal sectional view showing the shaft seal device according to a third embodiment of the present invention.
{Fig. 4} Longitudinal sectional view showing the shaft seal device according to a fourth embodiment of the present invention.
{Fig. 5} Longitudinal sectional view showing the shaft seal device according to a fifth embodiment of the present invention.
{Fig. 6} Longitudinal sectional view showing the shaft seal device according to a sixth embodiment of the present invention.
{Fig. 7} Plan view illustrating portions of the pumping parts furnished continuously in the circumferential direction to the outside peripheral surface of a rotary shaft or a sleeve in the shaft seal device according to the first to sixth embodiments of the present invention, showing a portion the outside peripheral surface of the rotary shaft or sleeve, developed into planar form.
{Fig. 8} Views of Fig. 7 along section A-A, (a) showing a case in which the pumping parts are furnished on the outside peripheral surface of the rotary member, and (b) a case in which the pumping parts are furnished to the bottom surface of a recessed part formed on the outside peripheral surface of the rotary member.
{Fig. 9} Drawing illustrating a modification of the pumping parts, showing a cross section seen from a plane orthogonal to the rotary shaft, as in Fig. 8.
{Fig. 10} Longitudinal sectional view illustrating Prior Art 1.
{Fig. 11} Longitudinal sectional view illustrating Prior Art 2.

### {DESCRIPTION OF EMBODIMENTS}

While the embodiments of the shaft seal device according to the present invention are described in detail with reference to the drawings, the present invention shall not be construed as being limited thereto, and it will be apparent to a person skilled in the art that various changes, modifications, and improvements can be made without departing from the scope of the invention as defined by the claims.

### {First embodiment}

Fig. 1 is a longitudinal sectional view showing the shaft seal device according to a first embodiment of the present invention.

In Fig. 1, a housing 1 is furnished with a rotary shaft passage hole 3 through which a rotary shaft 2 is inserted. The rotary shaft 2 is inserted through the rotary shaft passage hole 3, and the rotary shaft 2 is supported by bearings (not shown) or the like, across a prescribed gap from the peripheral wall of the rotary shaft passage hole 3.

Here, the rotary member and the stationary member are concentrically disposed to the inside and outside in a radial direction, the housing 1 corresponding to the stationary member, and the rotary shaft 2 corresponding to the rotary member.

A shaft seal device 10 is disposed between the rotary shaft 2 and the peripheral wall of the rotary shaft passage hole 3, and seals off the sealed fluid side L and the outside atmosphere side A.

In Fig. 1, the right side is the sealed fluid side L, and the left side is the outside atmosphere side A.

The shaft seal device 10 is equipped with a lip seal 11, partitioning the annular space across which the housing 1 and the rotary shaft 2 face into two spaces to the sealed fluid side L and to the outside atmosphere side A, and blocking the inside from the outside thereof. A seal lip member 13 made of an elastomer sheathes, in an annular arrangement, a reinforcing ring 12 having a substantially "L" shaped cross section in the radial direction. The rotary shaft 2 side of the seal lip member 13, i.e., the inside peripheral section, extends towards the sealed fluid side L and extends towards the inside peripheral side, and is shaped substantially like an inverted triangle in cross section, the edge-shaped section corresponding to the apex of the triangle forming a lip 14. When the lip 14 presses against the outside peripheral surface of the rotary shaft 2, the edge deforms and is capable of sliding over the outside peripheral surface of the rotary shaft 2 over a predetermined contact width in the axial direction.

A garter spring 15 for pressing the lip 14 against the outside peripheral surface of the rotary shaft 2 is installed on the outside periphery of the lip 14.

Pumping parts 20 for creating pumping action through relative rotational sliding of the seal lip member 13 and the rotary shaft 2 are formed in continuous fashion in the circumferential direction on the outside peripheral surface S of the rotary shaft 2. The pumping parts 20 and the lip 14 of the seal lip member 13 are arranged so as to slide along the outside peripheral surface of the rotary shaft 2 on which the pumping parts 20 have been formed, such that portions of the pumping parts 20 remain at the sealed fluid side L in the axial direction. In Fig. 1, portions of the pumping parts 20 on the outside atmosphere side are not covered by the lip 14.

In this way, the pumping parts 20 formed in continuous fashion in the circumferential direction communicate with the sealed fluid side L, but the sealed fluid side L and the outside atmosphere side A do not communicate due to pressing by the lip 14.

The length a1 of the pumping parts 20 in the axial direction is set to one somewhat greater than the length a2 along which the lip 14 contacts the outside peripheral surface S of the rotary shaft 2.

The configuration of the pumping parts 20 will be described in detail below.

### {Second Embodiment}

Fig. 2 is a longitudinal sectional view showing the shaft seal device according to a second embodiment of the present invention.

In Fig. 2, reference signs identical to the reference signs assigned in Fig. 1 signify members identical to the members in Fig. 1, and detailed description thereof is omitted.

The shaft seal device 30 is equipped with a lip seal 31 partitioning the annular space across which the housing 1 and the rotary shaft 2 face into two spaces to the sealed fluid side L and to the outside atmosphere side A, and blocking the inside from the outside thereof. The lip seal 31 is equipped with a resin seal lip member 32 of "L" shaped cross section, the seal lip member 32 being sandwiched by an outer metal linking ring 33 of generally "L" shaped cross section, and an inner metal retainer ring 34 of generally "L" shaped cross section.

A cylindrical lip 35 is formed to the inside peripheral side of the resin seal lip member 32 of "L" shaped cross section, this cylindrical lip 35 coming into strong close contact against outside peripheral surface of the rotary shaft 2 and sealing in the sealed fluid.

Pumping parts 20, which create pumping action through relative rotational sliding of the seal lip member 32 and the rotary member 2, are formed in continuous fashion in the circumferential direction on the outside peripheral surface S of the rotary shaft 2, in proximity to the zone of close contact of the cylindrical lip 35 and the outside peripheral surface of the rotary shaft 2.

The pumping parts 20 are basically identical to the pumping parts 20 of the first embodiment.

As in the first embodiment, the pumping parts 20 formed in continuous fashion in the circumferential direction, and the cylindrical lip 35 of the seal lip member 32, are arranged so as to slide relative to the outside peripheral surface of the rotary shaft 2 on which the pumping parts 20 have been formed, such that portions of the pumping parts 20 remain at the sealed fluid side L in the axial direction.

In this way, the pumping parts 20 formed in continuous fashion in the circumferential direction communicate with the sealed fluid side L, but the sealed fluid side L does not communicate with the outside atmosphere side A, due to pressing by the cylindrical lip 35. The portions of the pumping parts 20 on the outside atmosphere side are not covered by the cylindrical lip 35.

The length a1 of the pumping parts 20 in the axial direction is set to be somewhat greater than the length a2 along which the cylindrical lip 35 contacts the outside peripheral surface of the rotary shaft 2 in the axial direction.

The configuration of the pumping parts 20 will be described in detail below.

### {Third Embodiment}

Fig. 3 is a longitudinal sectional view showing the shaft seal device according to a third embodiment of the present invention.

In Fig. 3, reference signs identical to the reference signs assigned in Fig. 2 signify members identical to the members in Fig. 1, and detailed description thereof is omitted.

The third embodiment differs from the second embodiment in that a sleeve 4 for sealing is fitted together with the rotary shaft 2, but the configuration is otherwise identical to the second embodiment. Pumping parts 20 for creating pumping action through relative rotational sliding of the seal lip member 32 and the rotary shaft 2 are formed in continuous fashion in the circumferential direction on the outside peripheral surface S of the sleeve 4. Here, the sleeve 4 corresponds to the rotary member.

The configuration of the pumping parts 20 will be described in detail below.

### {Fourth Embodiment}

Fig. 4 is a longitudinal sectional view showing the shaft seal device according to a fourth embodiment of the present invention.

In Fig. 4, reference signs identical to the reference signs assigned in Fig. 2 signify members identical to the members in Fig. 2, and detailed description thereof is omitted.

The fourth embodiment differs from the second embodiment in that the length a1 in the axial direction of the pumping parts 20 for creating pumping action through relative rotational sliding of the seal lip member 32 and the rotary shaft 2 is set to substantially the same as, or somewhat less than, the length a2 along which the cylindrical lip 35 contacts the outside peripheral surface of the rotary shaft 2 in the axial direction; the pumping parts 20 formed in continuous fashion in the circumferential direction and the cylindrical lip 35 of the seal lip member 32 are arranged such that the cylindrical lip 35 covers the pumping parts part 20, such that portions of the pumping parts 20 remain at the sealed fluid side L in the axial direction; and the cylindrical lip 35 has a shape extended further towards the outside atmosphere side A, and is arranged so as to slide along the outside peripheral surface of the rotary shaft 2 to the outside atmosphere side A from the pumping parts 20.

In this way, the pumping parts 20 formed in continuous fashion in the circumferential direction communicate with the sealed fluid side L, but do not communicate with the outside atmosphere side A, due to the cylindrical lip 35 pressing against the outside peripheral surface S of the rotary shaft 2.

The configuration of the pumping parts 20 will be described in detail below.

### {Fifth Embodiment}

Fig. 5 is a longitudinal sectional view showing the shaft seal device according to a fifth embodiment of the present invention.

In Fig. 5, reference signs identical to the reference signs assigned in Fig. 4 signify members identical to the members in Fig. 4, and a detailed description thereof is omitted.

The fifth embodiment differs from the fourth embodiment in that a sleeve 4 for sealing is fitted together with the rotary shaft 2, but the configuration is otherwise identical to the fourth embodiment. Pumping parts 20 are formed in continuous fashion in the circumferential direction on the outside peripheral surface S of the sleeve 4.

Here, the sleeve 4 corresponds to the rotary member.

The configuration of the pumping parts 20 will be described in detail below.

### {Sixth Embodiment}

Fig. 6 is a longitudinal sectional view showing the shaft seal device according to a sixth embodiment of the present invention.

In Fig. 6, reference signs identical to the reference signs assigned in Fig. 1 signify members identical to the members in Fig. 1, and detailed description thereof is omitted.

The sixth embodiment differs from the first embodiment in that the length a1 in the axial direction of the pumping parts 20 for creating pumping action through relative rotational sliding of the seal lip member 13 and the rotary shaft 2 is set to substantially the same as, or somewhat less than, the length a2 along which the lip 14 contacts the outside peripheral surface of the rotary shaft 2 in the axial direction; the pumping parts 20 and the lip 14 of the seal lip member 13 are arranged such that the lip 14 covers the pumping parts 20, such that portions of the pumping parts 20 formed in continuous fashion in the circumferential direction remain at the sealed fluid side L in the axial direction; and the lip 14 has a shape extended further towards the outside atmosphere side A, and is arranged so as to slide along the outside peripheral surface of the rotary shaft 2 to the outside atmosphere side A from the pumping parts 20.

In this way, the pumping parts 20 formed in continuous fashion in the circumferential direction communicate with the sealed fluid side L, but do not communicate with the outside atmosphere side A, due to the lip 14 pressing against the outside peripheral surface S of the rotary shaft 2.

The pumping parts 20 will be described in detail below.

In the first embodiment of Fig. 1 and the sixth embodiment of Fig. 6 described above, the assembly of the sleeve 4 fitted together with the rotary shaft 2 can be implemented in the same manner as in the third embodiment of Fig. 3 and the fifth embodiment of Fig. 5.

### {Configuration of Pumping Parts}

Fig. 7 is a plan view illustrating portions of the pumping parts furnished continuously in the circumferential direction to the outside peripheral surface of a rotary shaft or a sleeve in the shaft seal device according to the first to sixth embodiments of the present invention, showing a portion of the outside peripheral surface of the rotary shaft or sleeve developed into planar form. In Fig. 7, of the first to sixth embodiments, the pumping parts 20 of the fourth to sixth embodiments are described by way of example; however, the pumping parts 20 of the first to third embodiments are similar in structure.

In order to achieve low abrasion at the sliding surface of the seal lip member against the outside peripheral face of the rotary member, normally, a liquid film of about 0.1 µm to 10 µm, depending on the type of sealed fluid, the temperature, and so on, is formed between the sliding surfaces. In the present invention, in order to obtain this liquid film, the pumping parts 20 for creating pumping action through relative rotational sliding of the seal lip member 13 and the rotary member are formed in continuous fashion in the circumferential direction on the sliding surface S of the rotary member, as described previously. The pumping parts 20 are configured of intake pumping parts 20a for acting on the sealed fluid in the intake direction, and discharge pumping parts 20b for acting on the sealed fluid in the discharge direction, respectively arranged independently.

In the individual intake pumping parts 20a and discharge pumping parts 20b there are formed a plurality of mutually parallel, linear asperities of predetermined pitch (in the present invention, also called "grooves of periodic structure"). As discussed below, these grooves of periodic structure are fine structures formed by a femtosecond laser, for example. The grooves of periodic structure may be formed coplanar to the outside peripheral surface of the rotary shaft 2 or the sleeve 4; or a recessed part 21 may be formed on the outside peripheral surface, and the grooves formed on the bottom surface of the recessed part. This aspect is described in detail below.

In Figs. 1 to 9, for convenience, boundaries between the intake pumping parts 20a and the discharge pumping parts 20b are shown by broken lines; however, no boundary lines are actually present.

Fig. 7 shows a case in which the rotary shaft 2 or the sleeve 4 rotates in direction R. The linear asperities formed in the intake pumping parts 20a and the discharge pumping parts 20b are formed so as to incline by predetermined angles θ with respect to the sliding direction of the sliding surface S. The predetermined angles θ are preferably within the range of 10° to 80° with respect to the sliding direction of the sliding surface S.

The incline angles θ of the linear asperities in the individual intake pumping parts 20a and discharge pumping parts 20b with respect to the rotation tangent may all be the same, or may differ for the different pumping parts 20a, 20b. However, as the sliding characteristics of the sliding surface S are affected by the incline angles θ, to obtain stable sliding characteristics, it is effective to standardize the incline angles of the asperities of the intake pumping parts 20a and discharge pumping parts 20b to a specific appropriate incline angle θ, depending on the required lubricating properties, sliding conditions, and so on.

Consequently, when the direction of rotational sliding of the sliding surface S is a single direction, the incline angles θ of the asperities of the individual intake pumping parts 20a and discharge pumping parts 20b with respect to the rotation tangent are prescribed to a specific optimal angle.

When the sliding surface S slides in both the forward and reverse directions, it is preferable to intersperse first pumping parts having asperities inclined at a first angle with respect to the rotation tangent to afford suitable sliding characteristics during rotation in a first direction, and second pumping parts having asperities inclined at a second angle with respect to the rotation tangent to afford suitable sliding characteristics during rotation in the opposite direction. With such a configuration, respectively appropriate sliding characteristics can be obtained when the sliding surface S rotates in both the forward and reverse directions.

More specifically, in cases in which the sliding surface S rotates in both the forward and reverse directions, it is appropriate to form the individual asperities of the intake pumping parts 20a and discharge pumping parts 20b such that the incline angles thereof are angles that are symmetrical with respect to the rotation tangent.

Moreover, it is favorable for the intake pumping parts 20a and the discharge pumping parts 20b to be formed in an arrangement in alternating fashion along the circumferential direction of the sliding surface S.

The sliding surface S shown in Fig. 7 is a favorable configuration for the sliding surface S, in cases in which the sliding surface S rotates in both directions.

The intake pumping parts 20a and discharge pumping parts 20b need not be arranged in alternating fashion along the circumferential direction of the sliding surface S, in the form of parts of identical length in the circumferential direction, and the ratio of the circumferential lengths of the intake pumping parts 20a and discharge pumping parts 20b may be modified appropriately; for example, the circumferential length of the intake pumping parts 20a can be made twice that of the discharge pumping parts 20b.

In the intake pumping parts 20a and discharge pumping parts 20b, which are structures of a plurality of mutually parallel, linear asperities of predetermined pitch arranged accurately at a prescribed pitch (grooves of periodic structure), may be formed, for example, using a femtosecond laser, by dividing a predetermined area of the sliding surface S into subdivisions in an exacting manner, and accurately controlling the direction of the asperities in each subdivision.

When a substrate is irradiated with a linearly-polarized laser at an irradiation intensity close to the threshold limit for machining, due to interference between the impinging light and scattered light or plasma waves along the surface of the substrate, a periodic structure of asperities having wavelength-order pitch and groove depth forms in self-organizing fashion orthogonally to the polarization direction. By performing the operation while overlapping the femtosecond laser at this time, a periodic structure pattern can be formed on the surface.

With such grooves of a periodic structure formed utilizing a femtosecond laser, it is possible to control the directionality thereof, and to control the machining position, whereby the surface can be divided into discrete subdivisions, and grooves of a desired periodic structure formed in in each of the subdivisions. Specifically, by employing this method while causing the outside peripheral surface of the cylindrical rotary shaft or sleeve to rotate, fine cyclic patterns can be selectively formed on the outside peripheral surface. With a machining method that utilizes a femtosecond laser, it is possible to form asperities of submicron-order depth effective for improving lubrication qualities and reducing leakage in the lip-type seal.

Formation of the grooves of a periodic structure is not limited to a femtosecond laser; a picosecond laser or electron beam may be employed. Moreover, formation of the grooves of a periodic structure may be accomplished by employing a die equipped with grooves of a periodic structure, and stamping or punching a cylindrical sliding surface while causing the die to rotate.

Furthermore, in a case in which the grooves of periodic structure are formed on the bottom part of a recessed part of the outside peripheral surface (sliding surface), the recessed part may be etched on the outside peripheral surface, and thereafter the grooves of a periodic structure formed on the bottom part of a recessed part using a femtosecond laser or the like. Alternatively, only a periodic structure may be formed in the outside peripheral surface, using a femtosecond laser or the like, followed by plating or depositing a film around the grooves of periodic structure, to form an enclosure.

Fig. 8 contains views of Fig. 7 along section A-A, (a) showing a case in which the pumping parts are furnished on the outside peripheral surface of the rotary member, and (b) a case in which the pumping parts are furnished to the bottom surface of a recessed part formed on the outside peripheral surface of the rotary member.

In order to achieve low abrasion at the sliding surface of the seal lip member against the outside peripheral face of the rotary member, normally, a liquid film h of 0.1 µm to 10 µm, depending on the type of sealed fluid, the temperature, and so on, is formed between the sliding surfaces. In this case, taking a hypothetical plane connecting the apical points of the asperities in the intake pumping parts 20a and the discharge pumping parts 20b, the hypothetical plane will be established either coplanar to or below the sliding surface S, depending on the liquid film h. Fig. 8 (a) shows a case in which the distance d1 between the sliding surface S and the hypothetical plane equals 0, that is, the hypothetical plane is coplanar to the sliding surface S; and Fig. 8 (b) shows a case in which the pumping parts 20 have been formed on the bottom part of a recessed part 21 formed on the sliding surface S, the hypothetical plane being set at a position lower by d1 > 0 with respect to the sliding surface S.

As shown in Figs. 1 to 3, in a case in which the lip 14 or cylindrical lip 35 of the lip seal slides against the outside peripheral face of the rotary shaft 2 in which the pumping parts 20 have been formed, from the standpoint of preventing leakage when at rest, the distance d1 between the sliding surface S and the hypothetical plane is preferably set such that 0 ≤ d1 ≤ 2 µm. The depth d2 to the bottom part from the hypothetical plane connecting the apical points of the asperities is preferably within the range 0 ≤ d2 ≤ 2 µm, and the total of d1 and d2 is preferably 0 ≤ d1 + d2 ≤ 2.5 µm.

On the other hand, as shown in Figs. 4 to 6, in a case in which the lip 14 or the cylindrical lip 35 of the lip seal slides against the outside peripheral face of the rotary shaft 2 to the outside atmosphere side from the pumping parts 20, the distance d1 between the sliding surface S and the hypothetical plane is preferably in the range d1 = 0 - 10h; and the depth d2 to the bottom part from the hypothetical plane connecting the apical points of the asperities is in the range d2 = 0.1-10 h.

Furthermore, while the pitch p of the linear asperities of the intake pumping parts 20a and the discharge pumping parts 20b is set according to the viscosity of the sealed fluid, in any of the cases depicted in Figs. 1 to 6, it is preferably 0.1 µm to 100 µm. In the case of a sealed fluid of high viscosity, a larger pitch p is better for sufficient entry of the fluid into the grooves.

In a case in which the pumping parts 20 are to be formed on the bottom part of the recessed part 21 formed on the sliding surface S, using a femtosecond laser, firstly, the recessed part 21 is formed, and then the pumping parts 20 are formed. In a case in which the pumping parts 20 are formed on the bottom part of the recessed part 21 formed on the sliding surface S, the sealed fluid can be drawn into the space inside the recessed part 21, creating more flow of liquid such that there is no leakage to the outside atmosphere side from the pumping parts 20.

As described above, when at rest, leakage is prevented, in the case of the first to third embodiments, by close contact of the lip member against the pumping parts 20 on the outside peripheral surface of the rotary shaft (or the sleeve), or in the case of the fourth to sixth embodiments, by close contact of the lip member against the sliding surface S and the pumping parts 20 on the outside peripheral surface of the rotary shaft (or the sleeve). Additionally, during startup, a lubricant fluid film can rapidly form due to the sealed fluid being drawn into the pumping parts 20, lowering the sliding torque of the sliding surface S and reducing wear. Furthermore, during operation, the sealed fluid is drawn into the intake pumping parts 20a, and this sealed fluid is fed into the adjacent discharge pumping parts 20b, returning the sealed fluid to the sealed fluid side through the action of the discharge pumping parts 20b. Through flow of the sealed liquid in this fashion, lubrication between the outside peripheral surface of the rotary shaft (or the sleeve) and the lip member can be assured, leakage can be prevented, and sealing can be maintained. In particular, in cases in which the hypothetical plane connecting the apical points of the pumping parts 20 is set below the sliding surface S, the hypothetical plane takes on a shape having a step d1 down from the sliding surface S, whereby during startup, the sealed fluid can be drawn into the recessed part 21, utilizing this to rapidly form a lubricant fluid film.

### {Modification of Pumping Parts}

Fig. 9 is a drawing illustrating a modification of the pumping parts, showing a cross section seen from a plane orthogonal to the rotary shaft, as in Fig. 8.

In Fig. 9, the intake pumping parts 20a of the pumping parts 20 formed in the bottom part of the recessed part 21 are formed such that the linear asperities thereof become progressively deeper towards the rotation direction R of the rotary shaft 2, while the discharge pumping parts 20b are formed such that the linear asperities thereof become progressively shallower towards the rotation direction R of the rotary shaft 2.

Thus, by forming the linear asperities so as to be inclined in side view in addition to being inclined with respect to the rotation tangent in plan view, in the intake pumping parts 20a, draw-in of the sealed fluid and feed thereof to the discharge pumping parts 20b can take place at a higher level, while in the discharge pumping parts 20b, return of the sealed fluid fed therein back to the sealed fluid side can take place at a higher level.

In addition to the case of being inclined in the circumferential direction, the linear asperities may instead be inclined in the axial direction, or inclined in both the circumferential direction and the axial direction.

In the case of the present example, where the thickness of the liquid film formed between the sliding surfaces is designated as h, in cases in which the lip 14 or the cylindrical lip 35 of the lip seal slides against the outside peripheral surface of the rotary shaft 2 to the outside atmosphere side from the pumping parts 20, the depth from the sliding surface to the deepest part and the shallowest part of the hypothetical plane connecting the apical points of the asperities should be set to within the range of 0 to 10h. Moreover, in cases in which the lip 14 or the cylindrical lip 35 of the lip seal slides against the outside peripheral surface of the rotary shaft 2 in which the pumping parts 20 have been formed, the depth from the sliding surface to the deepest part and the shallowest part of the hypothetical plane connecting the apical points of the asperities should be set to within the range of 0 to 2 µm.

### {REFERENCE SIGNS LIST}

- 1:: Housing
- 2:: Rotary shaft
- 3:: Rotary shaft passage hole
- 4:: Sleeve
- 10:: Shaft seal device
- 11:: Lip seal
- 12:: Reinforcing ring
- 13:: Seal lip member
- 14:: Lip
- 15:: Garter spring
- 20:: Pumping parts
- 20a:: Intake pumping parts
- 20b:: Discharge pumping parts
- 21:: Recessed part
- 30:: Shaft seal device
- 31:: Lip seal
- 32:: Seal lip member
- 33:: Metal linking ring
- 34:: Metal retainer ring
- 35:: Cylindrical lip
- S: Sliding surface of rotary member
- L: Sealed fluid side
- A: Outside atmosphere side

## Claims

1. A lip-type seal shaft seal device (10, 30) equipped with a rotary member (2) for rotating in a forward direction and a reverse direction, a stationary member (1) concentrically disposed to the inside or respectively outside in a radial direction relative to said rotary member (2), and a lip seal (11, 31) for sealing the rotary member (2) and the stationary member (1),
pumping parts (20) for creating pumping action through relative rotational sliding of said lip seal (11) and said rotary member (2) are formed in continuous fashion in the circumferential direction on the outside peripheral surface (S) of said rotary member (2);
said pumping parts (20) are configured with grooves forming a periodic structure comprising a plurality of linear asperities of predetermined pitch, said linear asperities being formed so that the direction thereof is at a predetermined angular incline with respect to the sliding direction of the sliding surfaces of said lip seal and respectively said rotary member (2);
said pumping parts (20) are configured with intake pumping parts (20a) having the plurality of linear asperities for acting on a sealed fluid in the intake direction, and with discharge pumping parts (20b) having the plurality of linear asperities for acting on the sealed fluid in the discharge direction, the intake and discharge pumping parts (20a, 20b) being arranged in a continuous fashion in the circumference direction on the outside peripheral surface of the rotary member (2), and the intake pumping parts (20a) and discharge pumping parts (20b) abutting against each other independently in alternating fashion along the circumferential direction, wherein an intake pumping part (20a) abuts against a discharge pumping part (20b), which said discharge pumping part (20b) further abuts to a further intake pumping part (20a) so to form said continuous alternating fashion in said circumference direction on the outside peripheral surface of the rotary member (2); the individual asperities of the intake pumping parts (20a) and discharge pumping parts (20b) are formed such that the inclined angels thereof are symmetrical with respect to the rotation tangent; and
a lip (14) of said lip seal (11, 31) extends in the axial direction towards the outside atmosphere side (A) leaving a portion of said pumping parts (20) on the sealed fluid side (L) exposed, wherein the intake pumping parts (20a) and the discharge pumping parts (20b) are arranged so that during operation the sealed fluid is drawn into the intake pumping parts (20a) and fed into adjacent discharge pumping parts (20b) thereby returning the sealed fluid to the sealed fluid side through the action of the discharge pumping parts (20b).

2. The shaft seal device (10, 30) according to claim 1, **characterized in that** the lip (14) of said lip seal (11, 31) extends in the axial direction towards the outside atmosphere side (A) and covers said pumping parts (20) leaving a portion of said pumping parts (20) on the sealed fluid side (L) exposed, and the lip (14) of said lip seal (11, 31) is configured to slide against the outside peripheral surface (S) of the rotary member (2) further toward the outside atmosphere side (A) relative to said pumping parts (20).

3. The shaft seal device (10, 30) according to claim 1, **characterized in that** the lip (14) of said lip seal (10, 30) is configured to slide against the outside peripheral surface (S) of the rotary member (2) in which said pumping parts (20) are formed, leaving a portion of said pumping parts (20) on the sealed fluid side (L) and the outside atmosphere side (A) in the axial direction exposed.

4. The shaft seal device (10, 30) according to claim 1, **characterized in that** said plurality of pumping parts (20) are formed such that the directions of said linear asperities of adjacent pumping parts (20) are symmetrical with respect to the sliding direction of the sliding surfaces.

5. The shaft seal device (10, 30) according to claim 1 or 4, **characterized in that** said grooves of periodic structure comprising a plurality of linear asperities of predetermined pitch in said pumping parts (20) are formed through irradiation by a femtosecond laser.

6. The shaft seal device (10, 30) according to any of claims 1 to 5, **characterized in that** said pumping parts (20) are furnished to the outside peripheral surface (S) of the rotary member (2), or to the bottom surface of a recessed part formed in continuous fashion in the circumferential direction on the outside peripheral surface of the rotary member (2).

7. The shaft seal device (10, 30) according to any of claims 1 to 6, **characterized in that** said intake pumping parts (20a) are formed such that the linear asperities become progressively deeper towards the direction of rotation of the rotary member (2) in side view, and the discharge pumping parts (20b) are formed such that the linear asperities become progressively shallower towards the direction of rotation of the rotary member (2) in side view.

## Patentansprüche

1. Wellendichtungsvorrichtung (10, 30) nach Art einer Lippendichtung, welche mit einem drehbaren Element (2) zum Drehen in eine Vorwärtsrichtung und eine Rückwärtsrichtung, einem feststehenden Element (1), welches konzentrisch an der Innenseite bzw. an der Außenseite in einer radialen Richtung relativ zu dem drehbaren Element (2) angeordnet ist, und einer Lippendichtung (11, 31) zum Abdichten des drehbaren Elements (2) und des feststehenden Elements (1) ausgestattet ist,
wobei Pumpenteile (20) zum Erzeugen einer Pumpbewegung durch ein relatives Rotationsgleiten der Lippendichtung (11) und des drehbaren Elements (2) auf kontinuierliche Weise in der Umfangsrichtung auf der äußeren peripheren Oberfläche (S) des drehbaren Elements (2) gebildet sind,
wobei die Pumpenteile (20) mit Nuten ausgebildet sind, welche eine periodische Struktur bilden, welche eine Mehrzahl von linearen Oberflächenunebenheiten mit vorbestimmtem Abstand aufweisen, wobei die linearen Oberflächenunebenheiten so gebildet sind, dass die Richtung davon in einer vorbestimmten schrägen Neigung in Bezug auf die Gleitrichtung der Gleitflächen der Lippendichtung bzw. des drehbaren Elements (2) liegt,
wobei die Pumpenteile (20) mit Einlasspumpenteilen (20a), welche eine Mehrzahl von linearen Oberflächenunebenheiten zum Wirken auf einem Dichtfluid in der Einlassrichtung aufweisen, und mit Auslasspumpenteilen (20b), welche die Mehrzahl an linearen Oberflächenunebenheiten zum Wirken auf das Dichtfluid in der Auslassrichtung aufweisen, ausgestattet sind, wobei die Einlass- und Auslasspumpenteile (20a, 20b) auf kontinuierliche Weise in der Umfangsrichtung auf der äußeren peripheren Oberfläche des drehbaren Elements (2) angeordnet sind, und die Einlasspumpenteile (20a) und die Auslasspumpenteile (20b) unabhängig abwechselnd entlang der Umfangsrichtung aneinander angrenzen, wobei ein Einlasspumpenteil (20a) an ein Auslasspumpenteil (20b) angrenzt, wobei das Auslasspumpenteil (20b) weiterhin an ein weiteres Einlasspumpenteil (20a) angrenzt, um so die kontinuierlich abwechselnde Weise in Umfangsrichtung auf der äußeren peripheren Oberfläche des drehbaren Elements (2) zu bilden, wobei die einzelnen Oberflächenunebenheiten der Einlasspumpenteile (20a) und der Auslasspumpenteile (20b) so gebildet sind, dass die Neigungswinkel davon symmetrisch gegenüber der Rotationstangente sind, und
sich eine Lippe (14) der Lippendichtung (11, 31) in axialer Richtung hin zu der äußeren Atmosphärenseite (A) erstreckt, wobei ein Abschnitt der Pumpenteile (20) auf der Dichtfluidseite (L) freigelegt bleibt, wobei die Einlasspumpenteile (20a) und die Auslasspumpenteile (20b) so angeordnet sind, dass während des Betriebs das Dichtfluid in die Einlasspumpenteile (20a) eingezogen wird und in benachbarte Auslasspumpenteile (20b) zugeführt wird, wodurch das Dichtfluid an die Dichtfluidseite durch die Betätigung der Auslasspumpenteile (20b) zurückgegeben wird.

2. Wellendichtungsvorrichtung (10, 30) nach Anspruch 1,
**dadurch gekennzeichnet, dass** sich die Lippe (14) der Lippendichtung (11,31) in axialer Richtung hin zu der äußeren Atmosphärenseite (A) erstreckt und die Pumpenteile (20) abdeckt, wobei ein Abschnitt der Pumpenteile (20) auf der Dichtfluidseite (L) freigelegt bleibt, und die Lippe (14) der Lippendichtung (11, 31) so ausgebildet ist, dass sie gegen die äußere periphere Oberfläche (S) des drehbaren Elements (2) gleitet, und weiter hin zu der äußeren Atmosphärenseite (A) relativ zu den Pumpenteilen (20).

3. Wellendichtungsvorrichtung (10, 30) nach Anspruch 1,
**dadurch gekennzeichnet, dass** die Lippe (14) der Lippendichtung (10, 30) so ausgebildet ist, dass sie gegen die äußere periphere Oberfläche (S) des drehbaren Elements (2), in welchem die Pumpenteile (20) gebildet sind, gleitet, wobei ein Abschnitt der Pumpenteile (20) auf der Dichtfluidseite (L) und der äußeren Atmosphärenseite (A) in axialer Richtung freigelegt bleibt.

4. Wellendichtungsvorrichtung (10, 30) nach Anspruch 1,
**dadurch gekennzeichnet, dass** die Mehrzahl der Pumpenteile (20) so ausgebildet ist, dass die Richtungen der linearen Oberflächenunebenheiten von benachbarten Pumpenteilen (20) symmetrisch gegenüber der Gleitrichtung der Gleitflächen sind.

5. Wellendichtungsvorrichtung (10, 30) nach Anspruch 1 oder 4,
**dadurch gekennzeichnet, dass** die Nuten der periodischen Struktur, welche eine Mehrzahl von linearen Oberflächenunebenheiten mit vorbestimmtem Abstand in den Pumpenteilen (20) aufweisen, durch Bestrahlung mit einem Femtosekundenlaser gebildet sind.

6. Wellendichtungsvorrichtung (10, 30) nach einem der Ansprüche 1 bis 5, **dadurch gekennzeichnet, dass** die Pumpenteile (20) an der äußeren peripheren Oberfläche (S) des drehbaren Elements (2) oder an der Unterseite eines vertieften Teils, welcher auf kontinuierliche Weise in Umfangsrichtung auf der äußeren peripheren Oberfläche des drehbaren Elements (2) gebildet ist, befestigt sind.

7. Wellendichtungsvorrichtung (10, 30) nach einem der Ansprüche 1 bis 6, **dadurch gekennzeichnet, dass** die Einlasspumpenteile (20a) so ausgebildet sind, dass die linearen Oberflächenunebenheiten in Drehrichtung des drehbaren Elements (2) in einer Seitenansicht zunehmend tiefer werden, und die Auslasspumpenteile (20b) so ausgebildet sind, dass die linearen Oberflächenunebenheiten in Drehrichtung des drehbaren Elements (2) in einer Seitenansicht zunehmend flacher werden.

## Revendications

1. Dispositif d'étanchéité d'arbre à joint de type à lèvre (10, 30) équipé d'un élément rotatif (2) pour tourner dans une direction vers l'avant et dans une direction inverse, d'un élément stationnaire (1) disposé concentriquement à l'intérieur ou respectivement à l'extérieur dans une direction radiale par rapport audit élément rotatif (2), et d'un joint à lèvre (11, 31) pour rendre étanche l'élément rotatif (2) et l'élément stationnaire (1),
des parties de pompage (20) destinées à créer une action de pompage par coulissement rotatif relatif dudit joint à lèvre (11) et dudit élément rotatif (2) sont formées de manière continue dans la direction circonférentielle sur la surface périphérique extérieure (S) dudit élément rotatif (2) ;
lesdites parties de pompage (20) sont configurées avec des rainures formant une structure périodique comprenant une pluralité d'aspérités linéaires d'un pas prédéterminé, lesdites aspérités linéaires étant formées de sorte que leur direction soit à une inclinaison angulaire prédéterminée par rapport à la direction de coulissement des surfaces de coulissement dudit joint à lèvre et respectivement dudit élément rotatif (2) ;
lesdites parties de pompage (20) sont configurées avec des parties de pompage d'admission (20a) ayant la pluralité d'aspérités linéaires pour agir dans la direction d'admission sur un fluide étanchéifié, et avec des parties de pompage de décharge (20b) ayant la pluralité d'aspérités linéaires pour agir dans la direction de décharge sur la fluide étanchéifié, les parties de pompage d'admission et de décharge (20a, 20b) étant agencées de manière continue dans la direction circonférentielle sur la surface périphérique extérieure de l'élément rotatif (2), et les parties de pompage d'admission (20a) et les parties de pompage de décharge (20b) venant en butée les unes contre les autres de façon indépendante de manière alternée le long de la direction circonférentielle, dans lequel une partie de pompage d'admission (20a) vient en butée contre une partie de pompage de décharge (20b), ladite partie de pompage de décharge (20b) venant en outre en butée sur une partie de pompage d'admission (20a) supplémentaire afin de former ladite manière alternée continu dans ladite direction circonférentielle sur la surface périphérique extérieure de l'élément rotatif (2) ; les aspérités individuelles des parties de pompage d'admission (20a) et des parties de pompage de décharget (20b) sont formées de sorte que leurs anges inclinés soient symétriques par rapport à la tangente de rotation ; et
une lèvre (14) dudit joint à lèvre (11, 31) s'étend dans la direction axiale vers le côté d'atmosphère extérieure (A) en laissant exposée une partie desdites parties de pompage (20) sur le côté de fluide étanchéifié (L), dans lequel les parties de pompage d'admission (20a) et les parties de pompage de décharge (20b) sont agencées de sorte que pendant le fonctionnement, le fluide étanchéifié est aspiré dans les parties de pompage d'admission (20a) et délivré dans des parties de pompage de décharge adjacentes (20b), en renvoyant ainsi le fluide étanchéifié vers le côté de fluide étanchéifié par l'action des parties de pompage de décharge (20b).

2. Dispositif d'étanchéité d'arbre (10, 30) selon la revendication 1, **caractérisé en ce que** la lèvre (14) dudit joint à lèvre (11, 31) s'étend dans la direction axiale vers le côté d'atmosphère extérieure (A) et recouvre lesdites parties de pompage (20) en laissant exposée une partie desdites parties de pompage (20) sur le côté de fluide étanchéifié (L), et la lèvre (14) dudit joint à lèvre (11, 31) est configurée pour coulisser contre la surface périphérique extérieure (S) de l'élément rotatif (2) plus loin vers le côté d'atmosphère extérieure (A) par rapport auxdites parties de pompage (20).

3. Dispositif d'étanchéité d'arbre (10, 30) selon la revendication 1, **caractérisé en ce que** la lèvre (14) dudit joint à lèvre (10, 30) est configurée pour coulisser contre la surface périphérique extérieure (S) de l'élément rotatif (2) où lesdites parties de pompage (20) sont formées, en laissant exposée une partie desdites parties de pompage (20) sur le côté de fluide étanchéifié (L) et le côté d'atmosphère extérieure (A) dans la direction axiale.

4. Dispositif d'étanchéité d'arbre (10, 30) selon la revendication 1, **caractérisé en ce que** ladite pluralité de parties de pompage (20) sont formées de telle sorte que les directions desdites aspérités linéaires des parties de pompage adjacentes (20) sont symétriques par rapport à la direction de coulissement des surfaces de coulissement.

5. Dispositif d'étanchéité d'arbre (10, 30) selon la revendication 1 ou 4, **caractérisé en ce que** lesdites rainures de structure périodique comprenant une pluralité d'aspérités linéaires d'un pas prédéterminé dans lesdites parties de pompage (20) sont formées via irradiation par un laser femtoseconde.

6. Dispositif d'étanchéité d'arbre (10, 30) selon l'une quelconque des revendications 1 à 5, **caractérisé en ce que** lesdites parties de pompage (20) sont fournies sur la surface périphérique externe (S) de l'élément rotatif (2), ou sur la surface inférieure d'une partie évidée formée de manière continue dans la direction circonférentielle sur la surface périphérique extérieure de l'élément rotatif (2)

7. Dispositif d'étanchéité d'arbre (10, 30) selon l'une quelconque des revendications 1 à 6, **caractérisé en ce que** lesdites parties de pompage d'admission (20a) sont formées de telle sorte que les aspérités linéaires deviennent progressivement plus profondes dans la direction de rotation de l'élément rotatif (2) en vue latérale, et les parties de pompage de décharge (20b) sont formées de telle sorte que les aspérités linéaires deviennent progressivement moins profondes dans la direction de rotation de l'élément rotatif (2) en vue latérale.
